# EUROPEAN PATENT SPECIFICATION

(11) **EP 1 029 285 B1**
(45) Date of publication and mention of the grant of the patent: **20.06.2001**
(21) Application number: 98952907.8
(22) Date of filing: 11.11.1998
(51) Int. Cl.: G06F 13/22

(54) **PERIPHERAL SERVICING**
BEDIENUNG VON PERIPHERIEGERÄTEN
GESTION DE PERIPHERIQUES

(30) Priority: 13.11.1997 GB 9724030
(43) Date of publication of application: 23.08.2000
(73) Proprietor: Virata Limited, Cambridge CB3 0BL (GB)
(72) Inventor: KNIGHT, Brian, James, Cambridge CB1 4NW (GB); LOO, Gert, Van, NL-6412 HV Heerlen (NL)
(74) Representative: Ritter, Stephen David
(86) International application number: GB9803373
(87) International publication number: WO9926155

(56) References cited:
- EP-A- 0 239 298
- EP-A- 0 652 523
- IE-B- 68 441
- US-A- 5 448 701
- BAKER ET AL: "Priority polling algorithm" IBM TECHNICAL DISCLOSURE BULLETIN, vol. 25, no. 1, June 1982, pages 431-432, XP002098412 New York, US

## Description

The present invention relates to computer systems, and more particularly to scheduling of servicing of peripherals calling for attention in such systems.

In many computer systems, there is processing unit of some kind (which we will call a central processing unit, CPU) and a plurality of peripherals (which term may include any device outside the CPU core) which compete to be serviced by the CPU. A typical example is in a message switching system where there is a plurality of channels with messages arriving on some channels and being sent out on others. For each channel, there will be a buffer. Incoming data accumulates in the buffers of receiving channels, and has to be transferred from those buffers to a central memory; outgoing data is fed out to the outgoing channels from the buffers of those channels, and the outgoing data has to be passed to those buffers from the central memory.

The data flows between the buffers and the central memory are controlled by the CPU. These data flows (more specifically, the data flow rates for the various channels) are likely to be highly variable. Poor scheduling control by the CPU may result in the buffers of outgoing channels underflowing and, more seriously, in the buffers of incoming channels overflowing, which can lead to data loss.

Similar scheduling problems can arise more widely, in other types of computer system.

One technique for scheduling in such situations is to assign priorities to the various devices. The CPU effectively scans or polls the devices, starting with the highest priority device. As soon as the CPU finds a device requiring servicing, it services the device; it then resumes the polling of the devices from the beginning (ie from the highest priority device) again.

If the priority sequence is fixed, it is usually hard-wired (ie defined by hardware). If it is desired to make the priority sequence adjustable, then it can be implemented by software, eg using a table which defines the priority sequence of the various devices. However, that involves a certain amount of CPU overhead and delay, and is generally not preferred.

A drawback of such priority based techniques is that a low priority device may be starved of service indefinitely, if higher priority devices keep demanding servicing before the CPU's scanning can reach the low priority device.

An alternative technique has therefore been developed, in which the CPU polls cyclically through the devices. Each time the CPU encounters a device needing servicing, it services that device; it then resumes its polling of the devices from that device onwards. This technique is termed the round robin technique.

In the round robin technique, all devices effectively have equal priority. There is therefore no additional flexibility to be gained by implementing it by software. Since software implementation involves additional CPU overheads and delays, the round robin technique is therefore normally implemented by hardware, using a pair of registers and associated logic circuitry. There is a device status register, with one bit for each device (ie incoming or outgoing channel). When a device needs servicing, it sets this bit (and clears it when it no longer needs servicing). There is also a round robin register, with the same number of bits as the device status register.

A single bit is set in the round robin register, and determines which device the CPU services. Each time the CPU finishes servicing a device, the bit in the round robin register is advanced to the position of the next set bit in the device status register (both registers are effectively cyclic). If no devices call for servicing, the device status register will have no bits set; the round robin register is then normally maintained with its single bit in the position matching the last device to be serviced; as soon as another device requires servicing, the corresponding bit is set in the device status register, and the bit in the round robin register is immediately advanced to the corresponding position.

The drawback of the round robin technique is precisely that all devices have effectively equal priorities. If a particular device has a high activity, then when the CPU has finished servicing it, it is desirable for it to be serviced again fairly soon. But with the round robin technique, all the other devices are effectively polled before the first device is reached again. If many of those other devices happen to require servicing, then they will all be serviced before the first device is reached again, even though their servicing could in fact be safely postponed, and the first device may by that time have overflowed.

EP-A-0339782 describes a system for achieving fixed priority, round robin or some combination of the two by means of a counter with programmable limits. The counter is incremented or decremented synchronously with the available time slots. US-A-5072363 is a variation on the latter technique in that it achieves different levels of service by using a counter to change the arbitration behaviour in a deterministic manner.

EP-A-0652523 discloses a data transmitter/receiver of a centralized monitoring station transmits data and received data from each of monitored stations. A polling level table stores polling levels calculated from request data level and transmission data level added to transmission data from the monitored stations. A monitored station number table stores the numbers of a monitored station to be polled with a polling level equal to or greater than 2 in one polling cycle. A polling level determining unit determines polling levels to be transmitted to the respective monitored stations based on the contents of the polling level table and the monitored station number table. A data transmitter/receiver of each of the monitored stations transits transmission data level corresponding to the polling level and transmission data with the added request data level to the centralized monitoring station.

The general object of the present invention is to improve scheduling to alleviate or overcome the problems in the prior art. This is achieved by providing a computer system in which scheduling provides advantages of both the priority and round robin techniques and the devices can request servicing at different priority levels depending on their dynamic state, this state being internal to the device and not related to any central bus in the system.

The invention is defined by the following claims.

A feature of the invention is that each peripheral device has associated with it (which may include a component integrated with the device) means arranged to produce a priority level signal which is indicative of the urgency with which that device needs servicing. For example, if three priority levels are used in a message switching system, a receiving device may produce a priority level 3 signal (low priority) when its buffer is not empty, a priority level 2 signal (medium priority) when its buffer is half full, and a priority level 1 signal (high priority) when its buffer is nearly full. A transmitting device may produce a priority level 3 signal (low priority) when its buffer is nearly full, a priority level 2 signal (medium priority) when its buffer is half full, and a priority level 1 signal (high priority) when its buffer is nearly empty. Of course, these are just examples; fewer (2 priority levels) or more may be employed, and the conditions for signalling the various levels may vary from device to device. In particular, some devices which receive data at a higher rate, or have a smaller buffer may switch to a higher priority level at lower levels of buffer occupancy (or emptiness in the case of an output device) than others. There will be no signal when the buffer is completely empty for a receiving device, or completely full for a transmitting device.

It is preferred that a device should only produce a single priority level signal at a time. However, it is possible that when a device produces a signal of the appropriate priority level, it may produce signals of lower priority level as well (so for example a level 2 priority signal will be automatically accompanied by a level 3 priority signal). This will not have a significant effect on the way in which the present system operates.

It will of course be realized that not all devices may need to produce priority level signals of all levels. For instance, a transmitting device may not be able to produce a priority signal of as high a level as a receiving device, because the consequences of underflow in a transmitting device buffer will often be less serious than the consequences of overflow in a receiving device buffer.

The devices pass their priority level signals to a device status register means which stores these signals. Associated with this means there is a round robin register means. In a standard round robin register, there is a marker bit which is advanced, each time a device is serviced, from that device to the next device needing servicing. In the present round robin register means, the marker bit is advanced from the current device to the next device at the highest active priority level.

The device status register means preferably consists of a separate device status register for each of the possible priority levels, and the round robin register means preferably consists of a corresponding or associated round robin register for each device status register, each containing the standard single bit.

When a device produces a priority signal, it sets the corresponding bit in the corresponding device status register. The device status registers are monitored to identify the highest priority level register with at least one bit set. The associated round robin register for that level is then used to determine which device the CPU should service next, and its bit is advanced to the next device (if any) at that priority level, ie to the next device in the corresponding device status register.

Thus in the present system, devices are normally processed in round robin fashion. However, the system also operates at a plurality of priority levels. Only devices at the highest active priority level are eligible for servicing.

However, no device is ever locked out indefinitely. Lock-out of devices is prevented in two ways. As the servicing of a device becomes more urgent, the device priority level is raised; and once all devices at the highest active priority level are fully serviced, the priority level drops to the next level down, and servicing of devices at that level recommences. It should be noted that in this latter situation, the servicing of devices at the new lower level recommences at the point where it was left off when the next priority level up became active. In other words, the position of the bit in each round robin register is frozen when the system enters a higher priority level. In fact, the devices will only enter the higher priority levels when the system is heavily loaded. The system may include means for allocating more system resources to the processor in response to detection that one or more devices are becoming in need of urgent servicing.

A computer system embodying the invention will now be described, by way of example, with reference to the drawings, in which:
Fig. 1 is a simplified block diagram of the system; and
Fig. 2 is a simplified block diagram of the scheduling means.

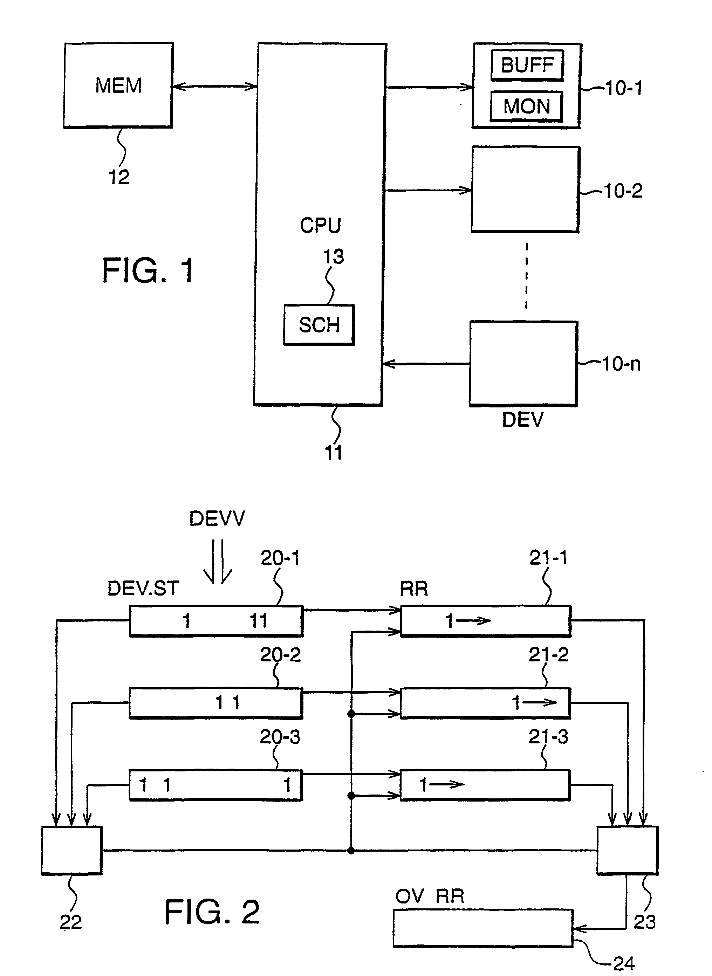

Referring to Fig. 1, the system comprises a set of devices 10-1 to 10-n, a CPU 11, and a memory 12. The devices 10 are communication devices, devices 10-1 and 10-2 being transmitting devices receiving data from the CPU and device 10-n being a receiving device feeding data to the CPU. It will be understood that the arrowheads on the couplings between the devices and the CPU show the direction of data flow; there are control signals flowing from all devices to the CPU and vice versa.

Each device includes a buffer BUFF, and priority setting means which monitors the occupancy of the buffer and generates a priority level signal accordingly. For a transmitting device such as devices 10-1 and 10-2 the priority setting means produces a priority level 3 signal (low priority) when its buffer is nearly full, a priority level 2 signal (medium priority) when its buffer is half full, and a priority level 1 signal (high priority) when its buffer is nearly empty. For receiving devices such as device 10-n the priority setting means produces a priority level 3 signal (low priority) when its buffer is not empty, a priority level 2 signal (medium priority) when its buffer is half full, and a priority level 1 signal (high priority) when its buffer is nearly full. There will be no signal when the buffer is completely empty for a receiving device, or completely full for a transmitting device.

The CPU 11 includes scheduling means 13 which receive the priority signals from the devices 10 and determine which device the CPU will service next. The scheduling means are shown in more detail in Fig. 2.

There are 3 device status registers 20-1, 20-2, and 20-3, one for each of the 3 priority levels. Each device status register has the same number of positions (bits) as the number of devices 10, one position for each device. The device status registers are fed with the priority level signals from the devices, so that when a device produces a priority level signal, the corresponding position in the corresponding device status register is set (and cleared when the device clears its priority level signal). The 3 device status registers thus together store the priority levels of the devices.

There is also a round robin register means consisting of a set of round robin register 21-1 to 21-3, one for each of the device status registers. Each of the round robin registers contains a single bit, whose position corresponds to a set bit in the associated device status register. The position of this bit in a selected one of the round robin registers determines which device will next be serviced by the CPU. When a device is so serviced and its priority level signal is cleared, the bit in that round robin register is advanced to correspond to the next set bit in the corresponding device status register.

The selection of the round robin register in the round robin register means for this is performed as follows.

A priority determining circuit 22 is fed from all the device status registers 20, and determines what the highest active priority is. If there is any bit set in the highest priority device status register 20-1, the highest priority is 1; if there is no bit set in the highest priority device status register 20-1, but any bit is set in the middle priority device status register 20-2, the highest priority is 2; if there is no bit set in the highest priority device status register 20-1 or the middle priority device status register 20-2 but any bit is set in the low priority device status register 20-3, the highest priority is 3. (If none of the device status registers has any bit set. then there is no device requiring service from the CPU.)

The priority determining circuit 22 enables the corresponding round robin register 21. This allows the set bit in the enabled register to advance to the position corresponding to the next set bit in the corresponding device status register, as described above.

The priority determining circuit 22 also controls a gate circuit 23, which couples the appropriate one of the round robin circuits 21 to an overall round robin circuit 24. This overall round robin circuit therefore contains a single bit, whose position matches that of the bit in the round robin circuit with the highest active priority. This information is conveyed to the CPU 11 at the appropriate time, for example in response to a read of this register by the CPU, or following an interrupt scheduled to ensure regular servicing of peripherals, and the CPU thereupon services the device corresponding to this set bit.

## Claims

1. A computer system comprising a CPU which services a plurality of peripheral devices (10-1, 10-n), the CPU having a scheduling controller (13) which includes (a) priority setting means associated with each of the devices for setting a selected priority level in device status register means (20-1, 20-2, 20-3), and (b) round robin register means (21-1, 21-2, 21-3), having marker means for selecting the next device to be serviced by the CPU, and means for advancing the marker in the round robin register means to the next device at the highest priority level in aid device status register means (20-1, 20-2, 20-3); characterised in that said peripheral devices (10-1, 10-n) each have respective priority setting means which set the priority level for that device depending on the urgency with which that device requires servicing.

2. A system according to claim 1, wherein a separate register is provided for each priority level in the respective device status register mean (20-1, 20-2, 20-3), and a corresponding round robin register (21-1, 21-2, 21-3) is provided in the round robin register means for each device status register, each round robin register containing a single bit; the system further including priority determining means (22) for identifying the highest priority level device status register with at least one bit set; and means in the marker advancing means for advancing the marker in the round robin register means (21-1, 21-2, 21-3) at the highest active priority level.

3. A system according to either previous claim, wherein different devices (10-1, 10-n) have different sets of priority levels.

4. A system according to Claim 3, wherein the devices (10-1, 10-n) are communication devices containing buffers and the priority level signals are determined by the state of occupancy of their buffers.

5. A system according to claim 4, wherein some devices (10-1, 10-n) which receive data at a higher rate. or have a smaller buffer may switch to a higher priority level at lower levels of buffer occupancy (or emptiness in the case of an output device) than others.

6. A system according to claim 4 or 5, wherein when a device (10-1, 10-n) produces a signal of the appropriate priority level, it may produce signals of lower priority level.

7. A system according to any preceding claim, wherein lock-out of the devices (10-1, 10-n) is prevented by raising the device priority as servicing becomes more urgent, and once all devices at the highest active priority level are fully serviced, the priority level is dropped to a lower level, and servicing of devices (10-1, 10-n) at that level recommences; servicing of devices (10-1, 10-n) at the new lower level recommencing at a point where it was left off when a higher priority level up became active.

8. A system according to any preceding claim, wherein the system includes means (23, 24) for allocating more system resources to the CPU in response to detection that one or more devices (10-1, 10-n) are becoming in need of urgent servicing.

## Patentansprüche

1. Computersystem, das aufweist, eine CPU, die mehrere periphere Einrichtungen (10-1, 10-n) bedient, wobei die CPU eine Planungssteuerung (13), die (a) eine Prioritätseinstellungseinrichtung, die mit jeder der Einrichtungen verbunden ist, um einen ausgewählten Prioritätspegel in einem Einrichtungsstatusregistermittel (20-1, 20-2, 20-3) einzustellen, und (b) Registermittel (21-1, 21-2, 21-3) zur Anfrage bzw. zur Eingabe, die eine Zeigereinrichtung hat, um die nächste Einrichtung, die durch die CPU zu bedienen ist, auszuwählen, und Mittel enthält, um den Zeiger in der Registereinrichtung für die Anfrage bzw. Eingabe zu der nächsten Einrichtung bei dem höchsten Prioritätsniveau in der Einrichtungsstatusregistereinrichtung (20-1, 20-2, 20-3) voranzubewegen; dadurch **gekennzeichnet**, dass die peripheren Einrichtungen (10-1, 10-n) jeweils jeweilige Prioritätseinstellungsmittel haben, die das Prioritätsniveau für diese Einrichtung abhängig von der Dringlichkeit, mit der diese Einrichtung Bedienung benötigt, einstellt.

2. System nach Anspruch 1, wobei ein separates Register für jedes Prioritätsniveau in der jeweiligen Einrichtungsstatusregistereinrichtung (20-1, 20-2, 20-3) vorgesehen ist, und ein entsprechendes Register für eine Anfrage bzw. Eingabe (21-1, 21-2, 21-3) in der Registereinrichtung für die Anfrage bzw. Eingabe für jedes Einrichtungsstatusregister vorgesehen ist, wobei jedes Register für eine Anfrage bzw. Eingabe ein einzelnes Bit enthält;
wobei das System ferner Prioritätsbestimmungsmittel (22) enthält, um das Einrichtungsstatusregister mit dem höchsten Prioritätsniveau mit zumindest einem gesetzten Bit zu erkennen; und Mittel in der Zeigervoranbewegungseinrichtung, um den Zeiger in der Registereinrichtung (21-1, 21-2, 21-3) für die Anfrage bzw. Eingabe bei dem höchsten aktiven Prioritätsniveau voranzutreiben.

3. System nach einem der voranstehenden Ansprüche, wobei verschiedene Einrichtungen (10-1, 10-n) verschiedene Sätze von Prioritätsniveaus haben.

4. System nach Anspruch 3, wobei die Einrichtungen (10-1, 10-n) Kommunikationseinrichtungen sind, die Puffer bzw. Zwischenspeicher enthalten und die Prioritätsniveausignale werden durch den Zustand der Belegung dieser Puffer bzw. Zwischenspeicher bestimmt.

5. System nach Anspruch 4, wobei einige Einrichtungen (10-1, 10-n), die Daten bei einer höheren Rate empfangen oder einen kleineren Puffer bzw. Zwischenspeicher haben, auf ein höheres Prioritätsniveau bei niedrigeren Niveaus der Puffer- bzw Zwischenspeicherbelegung (oder Leerung in dem Fall einer Ausgabeeinrichtung) als andere geschaltet werden.

6. System nach einem der Ansprüche 4 oder 5, wobei, wenn eine Einrichtung (10-1, 10-n) ein Signal des passenden Prioritätsniveaus erzeugt, sie Signale eines niedrigeren Prioritätsniveaus erzeugen kann.

7. System gemäß einem der voranstehenden Ansprüche, wobei ein Ausschluss der Einrichtungen (10-1, 10-n) verhindert ist, indem die Priorität der Einrichtung angehoben wird, wenn die Bedienung dringlicher wird und sobald sämtliche Einrichtungen mit dem höchsten aktiven Prioritätsniveau vollständig bedient sind, wird das Prioritätsniveau auf ein niedrigeres Niveau abgesenkt und die Bedienung von Einrichtungen (10-1, 10-n) mit diesem Niveau wird wieder begonnen; die Bedienung von Einrichtungen (10-1, 10-n) bei den neuen niedrigeren Niveaus wird an einem Punkt wieder begonnen, wo sie verlassen wurde, als ein höheres Prioritätsniveau aktiv wurde.

8. System gemäß irgendeinem voranstehenden Anspruch, wobei das System ein Mittel (23, 24) enthält, um der CPU mehr Systembetriebsmittel in Reaktion auf die Erfassung zuzuweisen, dass eine oder mehrere Einrichtungen (10-1, 10-n) die Notwendigkeit nach einer dringlichen Bedienung erhalten.

## Revendications

1. Un système informatique comprenant une unité centrale qui prend en charge une multiplicité de dispositifs périphériques (10-1, 10-n), l'unité centrale ayant une unité de commande d'ordonnancement (13) qui comprend (a) des moyens de fixation de priorité associés à chacun des dispositifs pour fixer un niveau de priorité sélectionné dans une structure de registres d'état de dispositifs (20-1, 20-2, 20-3), et (b) une structure de registres d'interrogation à tour de rôle (21-1, 21-2, 21-3), ayant des moyens marqueurs pour sélectionner le dispositif suivant que l'unité centrale doit prendre en charge, et des moyens pour faire avancer le marqueur dans la structure de registres d'interrogation à tour de rôle jusqu'au dispositif suivant ayant le niveau de priorité le plus élevé dans la structure de registres d'état de dispositifs (20-1, 20-2, 20-3);
caractérisé en ce que les dispositifs périphériques (10-1, 10-n) ont chacun des moyens de fixation de priorité respectifs qui fixent le niveau de priorité pour le dispositif considéré en fonction de l'urgence avec laquelle ce dispositif demande à être pris en charge.

2. Un système selon la revendication 1, dans lequel un registre séparé est incorporé pour chaque niveau de priorité dans la structure de registres d'état de dispositifs respective (20-1, 20-2, 20-3), et un registre d'interrogation à tour de rôle (21-1, 21-2, 21-3) correspondant est incorporé dans la structure de registres d'interrogation à tour de rôle pour chaque registre d'état de dispositifs, chaque registre d'interrogation à tour de rôle contenant un seul bit;
le système comprenant en outre des moyens de détermination de priorité (22) pour identifier le registre d'état de dispositifs ayant le niveau de priorité le plus élevé avec au moins un bit instauré; et des moyens dans les moyens d'avance de marqueur pour faire avancer le marquer dans la structure de registres d'interrogation à tour de rôle (21-1, 21-2, 21-3) au niveau de priorité actif le plus élevé.

3. Un système selon l'une quelconque des revendications précédentes, dans lequel différents dispositifs (10-1, 10-n) ont différents ensembles de niveaux de priorité.

4. Un système selon la revendication 3, dans lequel les dispositifs (10-1, 10-n) sont des dispositifs de communication contenant des tampons et les signaux de niveau de priorité sont déterminés par l'état d'occupation de leurs tampons.

5. Un système selon la revendication 4, dans lequel certains dispositifs (10-1, 10-n) qui reçoivent des données à une cadence supérieure, ou qui ont un plus petit tampon, peuvent commuter vers un niveau de priorité plus élevé à des niveaux inférieurs d'occupation du tampon (ou de non-occupation dans le cas d'un dispositif de sortie), en comparaison avec d'autres.

6. Un système selon la revendication 4 ou 5, dans lequel lorsqu'un dispositif (10-1, 10-n) produit un signal du niveau de priorité approprié, il peut produire des signaux de niveau de priorité inférieur.

7. Un système selon l'une quelconque des revendications précédentes, dans lequel l'exclusion des dispositifs (10-1, 10-n) est empêchée en élevant la priorité d'un dispositif lorsque son besoin de prise en charge devient plus urgent, et une fois que tous les dispositifs au niveau de priorité actif le plus élevé ont été entièrement pris en charge, le niveau de priorité est abaissé à un niveau inférieur, et la prise en charge des dispositifs (10-1, 10-n) à ce niveau recommence; la prise en charge des dispositifs (10-1, 10-n) au nouveau niveau inférieur recommençant à un point auquel elle a été interrompue lorsqu'un niveau de priorité supérieur est devenu actif.

8. Un système selon l'une quelconque des revendications précédentes, dans lequel le système comprend des moyens (23, 24) pour allouer davantage de ressources de système à l'unité centrale en réponse à la détection du fait qu'un besoin de prise en charge urgent se manifeste pour un ou plusieurs dispositifs (10-1, 10-n).
